Europäisches Patentamt

European Patent Office

Office européen des brevets

(11) Veröffentlichungsnummer: **0 033 010**
**B1**

## EUROPÄISCHE PATENTSCHRIFT

(12)

(45) Veröffentlichungstag der Patentschrift:
**16.05.84**

(21) Anmeldenummer: **80108167.0**

(22) Anmeldetag: **23.12.80**

(51) Int. Cl.³: **F 16 K 15/04,** F 16 K 31/22

(54) Schwimmerrückschlagventil.

(30) Priorität: **23.01.80 DE 3002216**

(43) Veröffentlichungstag der Anmeldung:
**05.08.81 Patentblatt 81/31**

(45) Bekanntmachung des Hinweises auf die Patenterteilung:
**16.05.84 Patentblatt 84/20**

(84) Benannte Vertragsstaaten:
**AT CH FR IT LI**

(56) Entgegenhaltungen:
**AT - B - 297 200**
**DE - A - 2 260 874**
**DE - A - 2 505 557**
**DE - B - 1 105 674**
**DE - C - 728 623**
**FR - A - 1 528 370**
**FR - A - 2 075 645**
**US - A - 1 727 525**
**US - A - 2 615 676**
**US - A - 3 113 587**
**US - A - 3 534 767**

(73) Patentinhaber: **BROWN BOVERI REAKTOR GmbH,
Dudenstrasse 44, D-6800 Mannheim 1 (DE)**

(72) Erfinder: **Stiefel, Max, Ing. (grad.), Thüringerstr. 69,
D-6800 Mannheim 31 (DE)**

BUNDESDRUCKEREI BERLIN

## Schwimmerrückschlagventil

Die Erfindung betrifft ein Schwimmerrückschlagventil gemäß dem Oberbegriff des Anspruchs 1.

Ein derartiges Schwimmerrückschlagventil ist aus der DE-A 2 002 588 bekannt. Es ist Bestandteil eines Rückstaudoppelverschlusses für Entwässerungsleitungen. Das Schwimmergehäuse und die Schwimmerkammer sind dort Bestandteil eines Armaturengehäuses in dem noch eine von Hand betätigbare Absperreinrichtung und eine Tauchwand als Geruchverschluß angeordnet sind. Die Tauchwand kann den Rückfluß von Gasen nur bei der beschriebenen Bauart mit seiner etwa im rechten Winkel zueinander liegenden Ein- und Auslaßöffnung der Schwimmerkammer verhindern.

Es ist die Aufgabe der Erfindung, ein Ventil der eingangs genannten Art anzugeben bei dem sich der Ein- und Auslaß in übereinander angeordneten Seitenwänden der Schwimmerkammer befindet und trotzdem neben dem Rückfluß von Wasser auch das Zurückströmen von Gas verhindert wird.

Gelöst wird die Aufgabe erfindungsgemäß durch die im kennzeichnenden Teil des Anspruchs 1 angegebenen Merkmale. Besondere Ausführungsarten der Erfindung sind in den abhängigen Ansprüchen angegeben.

Befindet sich in dem vom Syphongehäuse wegführenden Leitungssystem eine Gasblase, so kann diese im Falle eines Rückstaus nicht in das zum Schwimmergehäuse führende Leitungssystem eindringen. Das im Syphongehäuse vorhandene Wasservolumen wird nämlich vor der Gasblase hergeschoben und bewirkt ein rechtzeitiges Schließen des Rückschlagventils.

Weitere vorteilhafte Ausgestaltungen des Schwimmerrückschlagventils sind in den Unteransprüchen enthalten.

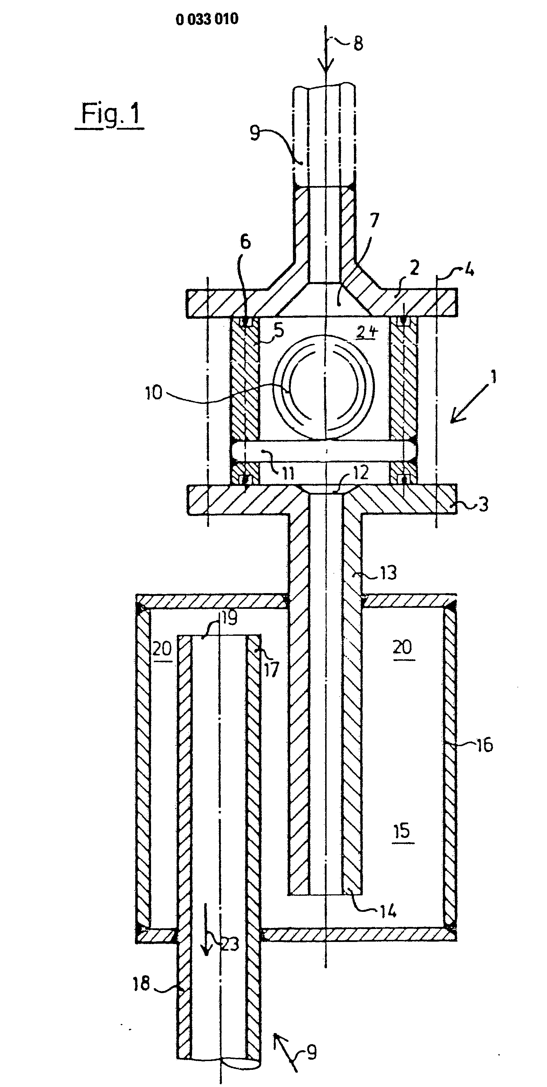

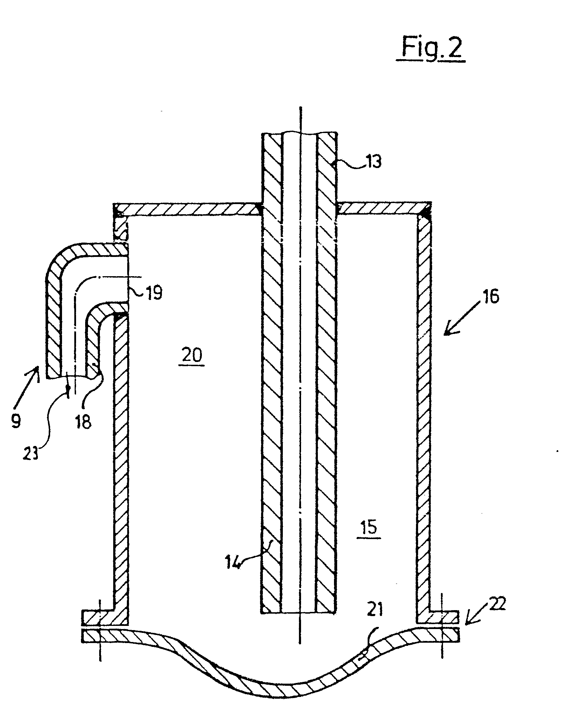

Anhand der schematischen Zeichnung Fig. 1 und 2 ist das erfindungsgemäße Schwimmerrückschlagventil beschrieben.

Mit 1 ist ein Schwimmergehäuse bezeichnet, daß aus einem oberen und unteren Flansch 2, 3 und einem über Schraubverbindungen 4 zwischen den Flanschen 2, 3 eingespannten zylindrischen Mantel 5 besteht. Die Berührungsflächen zwischen dem Mantel und den Flanschen sind durch Rundschnurringe 6 abgedichtet. Im oberen Flansch 2 befindet sich die trichterförmig erweiterte Einlaßöffnung 7 durch die beim Normalbetrieb, des mit einem Schwimmerrückschlagventil gesicherten nur andeutungsweise dargestellten Leitungssystems 9, ein Flüssigkeitsstrom in Pfeilrichtung 8 fließt. Der Flüssigkeitsstrom drückt die Schwimmerkugel 10 gegen einen innerhalb der Schwimmerkammer 24 am Mantel 5 abgestützten Steg 11. Der Steg ist oberhalb der Auslaßöffnung 12 des Schwimmergehäuses 1 angeordnet, die im unteren Flansch 3 angebracht ist. Die Auslaßöffnung 12 ist in dem Rohr 13 fortgeführt, das mit seinem freien Ende 14 bis in die untere Hälfte 15 des Syphongehäuses 16 ragt. Der Flüssigkeitsstrom verläßt über die Überströmöffnungen 19 am freien Ende 17 der zum Leitungssystem 9 gehörenden Rohrleitung 18 das Syphongehäuse 16. Die Überströmöffnung 19 ist in der oberen Hälfte 20 des als Schweißkonstruktion ausgebildeten Syphongehäuses angeordnet.

Wie aus der Fig. 2 zu ersehen ist, ist die Überströmöffnung 19 in einer Seitenwand des Syphongehäuses angeordnet und von dort aus mit der Rohrleitung 18 des Rohrleitungssystems 9 verbunden. Diese Ausbildung hat den Vorteil, daß der Boden 21 des Syphongehäuses nach außen gewölbt ausgebildet und über die Flanschverbindung 22 lösbar verbunden werden kann. Damit wird der Ablagerung von spezifisch schwereren Verunreinigungen entgegengewirkt und deren Entfernung erleichtert.

Sobald bei einer Störung im Leitungssystem 9 ein Rückfluß in Pfeilrichtung 23 erfolgt, wird die Schwimmerkugel 10, die aus Polyurethan-Integralschaum oder aus einer von einem Elastomer umgebenen hohlen Metallkugel besteht, in die trichterförmig ausgebildete Einlaßöffnung 7 gedrückt. Die elastische Oberfläche der Schwimmerkugel ergibt bereits bei geringen Andrückkräften ein sicheres Abdichten. Zur Erzielung einer einwandfreien Funktion wird das Durchmesserverhältnis von Schwimmerkammer zu Schwimmerkugel zum größten Durchmesser der trichterförmigen Einlaßöffnung vorzugsweise kleiner als 3 zu 2 zu 1 gewählt. Damit wird sichergestellt, daß zur Vermeidung von Verstopfungen ein ausreichend bemessener Durchflußquerschnitt verbleibt und bei zu kleiner Kugel ein Hängenbleiben derselben an der durch den größten Durchmesser der trichterförmigen Öffnung gebildeten Kante verhindert wird.

Ein wichtiger Faktor für das Funktionieren der Rückflußverhinderung von im Leitungssystem enthaltenem Gas ist das Verhältnis des Syphon-Sumpfvolumens zum Inhalt des Schwimmergehäuses 1 einschließlich des Inhalts des Rohres 13. Dieses Verhältnis muß größer als eins sein und beträgt vorzugsweise zwei, damit in der Leitung 18 enthaltenes Gas nicht in das Schwimmergehäuse gelangen kann. Vielmehr drückt dieses Gas bei einem Rückstau das Wasser aus dem Syphon-Sumpf in die Schwimmerkammer, so daß die Schwimmerkugel allein durch Wasser in die trichterförmige Einlaßöffnung gedrückt wird.

Unter Syphon-Sumpfvolumen ist das zwischen dem freien Ende 14 des Rohres 13 und der Überströmöffnung 19 gebildete Wasservolumen des Syphongehäuses zu verstehen. Durch die Größe des Sumpfvolumens wird weiterhin erreicht, daß auch bei Druckschwankungen die Funktion sichergestellt ist.

Mit dem erfindungsgemäßen Schwimmerrückschlagventil wird ein Rückfluß eventuell im Leitungssystem 9 enthaltener Gase sowie der Flüssigkeit in den vom Ventil abzusperrenden Leitungsteil mit Sicherheit vermieden.

Bezugszeichenliste

| 1 | Schwimmergehäuse |
|---|---|
| 2, 3 | Flansch |
| 4 | Schraubverbindung |
| 5 | Mantel |
| 6 | Rundschnurring |
| 7 | Einlaßöffnung |
| 8, 23 | Pfeilrichtung |
| 9 | Leitungssystem |
| 10 | Schwimmerkugel |
| 11 | Steg |
| 12 | Auslaßöffnung |
| 13 | Rohr |
| 14, 17 | freies Ende |
| 15 | untere Hälfte |
| 16 | Syphongehäuse |
| 18 | Rohrleitung |
| 19 | Überströmöffnung |
| 20 | obere Hälfte |
| 21 | Boden |
| 22 | Flanschverbindung |
| 24 | Schwimmerkammer |

**Patentansprüche**

1. Schwimmerrückschlagventil mit einem Schwimmergehäuse (1), das eine Schwimmerkammer mit einer darin angeordneten Schwimmerkugel (10) umschließt und eine Ein- und Auslaßöffnung (7, 12) für die durchströmende Flüssigkeit aufweist, dadurch gekennzeichnet, daß die Auslaßöffnung (12) unterhalb der Schwimmerkugel (10) angeordnet ist, daß ein von der Auslaßöffnung (12) wegführendes Rohr (13) mit seinem freien Ende (14) in die untere Hälfte (15) eines Syphongehäuses (16) ragt, daß in der oberen Hälfte (20) des Syphongehäuses eine Überströmöffnung (19) angeordnet ist, und daß das zwischen dem freien Ende (14) des Rohres (13) und der Überströmöffnung gebildete Wasservolumen des Syphongehäuses (16) größer ist als der Rauminhalt von Schwimmergehäuse (1) und Rohr (13).

2. Schwimmerrückschlagventil nach Anspruch 1, dadurch gekennzeichnet, daß die Einlaßöffnung (7) im oberen Flansch (2) des Schwimmergehäuses (1) angeordnet und zum Inneren der Schwimmerkammer (24) hin trichterförmig erweitert ist, daß die Schwimmerkugel (10) bei durchströmtem Schwimmerrückschlagventil auf einem oberhalb der Auslaßöffnung (12) angeordneten Steg (11) ruht und im Falle der Rückflußverhinderung gegen die trichterförmige Einlaßöffnung gelegt ist.

3. Schwimmerrückschlagventil nach Anspruch 1 oder 2, dadurch gekennzeichnet, daß das Verhältnis des Innendurchmessers der Schwimmerkammer zum Durchmesser der Schwimmerkugel und zum größten Durchmesser der trichterförmigen Einlaßöffnung (7) kleiner als 3 : 2 : 1 ist.

4. Schwimmerrückschlagventil nach Anspruch 1, 2 oder 3, dadurch gekennzeichnet, daß die Schwimmerkugel (10) aus Polyurethan-Integralschaum besteht.

5. Schwimmerrückschlagventil nach Anspruch 1, 2 oder 3, dadurch gekennzeichnet, daß die Kugel eine mit einem Elastomeren verkleidete Stahlhohlkugel ist.

6. Schwimmerrückschlagventil nach Anspruch 1, dadurch gekennzeichnet, daß die Überströmöffnung (19) von dem freien Ende (17) einer Rohrleitung (18) gebildet ist.

7. Schwimmerrückschlagventil nach Anspruch 1 oder 6, dadurch gekennzeichnet, daß die Überströmöffnung in einer Seitenwand des Syphongehäuses (16) angeordnet ist.

8. Schwimmergehäuse nach Anspruch 7, dadurch gekennzeichnet, daß der Boden (21) des Syphongehäuses nach außen gewölbt und abnehmbar ausgebildet ist.

**Claims**

1. A non-return float valve with a float bowl (1) which encloses a float chamber with a float ball (10) arranged inside, and inlet and outlet openings (7, 12) for the liquid passing through it, characterized in that the outlet opening (12) is arranged below the float ball (10), that the free end of a tube (13) leading away from the outlet (12) protrudes with its free end (14) into the lower half (15) of a siphon housing (16), that an overflow opening (19) is arranged in the upper half (20) of the siphon housing, and that the water volume in the siphon housing (16) between the free end (14) of the tube (13) and the overflow opening is larger than the combined volume of the float bowl (1) and the tube (13).

2. A non-return float valve as per claim 1, characterized in that the inlet opening (7) is arranged in the upper flange (2) of the float bowl (1) and opens like a funnel towards the interior of the float chamber (24), that the float ball (10) rests against a web (11) arranged above the outlet opening (12) while there is a flow through the non-return float valve, and that it presses against the funnel-shaped inlet opening when a return flow must be prevented.

3. A non-return float valve as per claims 1 or 2, characterized in that the ratio between the inside diameter of the float chamber, the diameter of the float hball, and the largest diameter of the funnel-shaped inlet opening (7) is smaller than 3 : 2 : 1.

4. A non-return float valve as per claims 1, 2, or 3, characterized in that the float ball (10) is made of integral polyurethane foam.

5. A non-return float valve as per claims 1, 2, or 3, characterized in that the ball is a hollow ball made of steel and covered with an elastomer.

6. A non-return float valve as per claim 1, characterized in that the overflow opening (19) is

formed by the free end (17) of a pipe (18).

7. A non-return float valve as per claims 1 or 6, characterized in that the overflow opening is arranged in a side wall of the siphon housing (16).

8. A non-return float valve as per claim 7, characterized in that the bottom (21) of the siphon housing is convex and detachable.

**Revendications**

1. Clapet anti-retour à flotteur, comportant un carter (1) die flotteur qui entoure une chambre à flotteur dans laquelle se trouve un flotteur sphérique (10) et qui est percé d'orifices d'admission et de sortie (7, 12) du flux de liquide traversant, caractérisé par le fait que l'orifice de sortie (12) est ménagé au-dessous du flotteur sphérique (10); par le fait qu'un tube (13) partant de l'orifice de sortie (12) se prolonge par son extrémité liebre (14) jusqu'à la moitié inférieure (15) d'un caisson (16) à siphon; par le fait qu'un orifice de trop-plein (19) est pratiqué dans la moitié supérieure (20) dudit caisson à siphon; et par le fait que le volume d'eau dudit caisson (16) à siphon, formé entre l'extrémité libre (14) du tube (13) et l'orifice de trop-plein, est plus grand que le volume de l'espace interne du carter (1) du flotteur et dudit tube (13).

2. Clapet anti-retour à flotteur selon la revendication 1, caractérisé par le fait que l'orifice d'admission (7) est ménagé dans l'aile supérieure (2) du carter (1) du flotteur et est élargie en forme d'entonnoir vers l'espace interne de la chambre (24) à flotteur; et par le fait que, lorsqu'un écoulement traverse ledit clapet, le flotteur sphérique (10) est en appui sur une barrette (11) située au-dessus de l'orifice de sortie (12) et est appliqué contre l'orifice d'admission infundibuliforme dans le cas où le flux de retour est empêché.

3. Clapet anti-retour à flotteur selon la revendication 1 ou 2, caractérisé par le fait que le rapport du diamètre interne de la chambre à flotteur au diamètre du flotteur sphérique et au plus grand diamètre de l'orifice d'admission (7) infundibuliforme est inférieur à 3 : 2 : 1.

4. Clapet anti-retour à flotteur selon la revendication 1, 2 ou 3, caractérisé par le fait que le flotteur sphérique (10) consiste an une mousse intégrale de polyuréthane.

5. Clapet anti-retour à flotteur selon la revendication 1, 2 ou 3, caractérisé par le fait que le flotteur sphérique consiste en une bille creuse en acier revêtue d'un élastomère.

6. Clapet anti-retour à flotteur selon la revendication 1, caractérisé par le fait que l'orifice de trop-plein (19) est formé par l'extrémité libre (17) d'un conduit tubulaire (18).

7. Clapet anti-retour à flotteur selon la revendication 1 ou 6, caractérisé par le fait que l'orifice de trop-plein est pratiqué dans une paroi latérale du caisson (16) à siphon.

8. Boîtier de flotteur selon la revendication 7, caractérisé par le fait que le fond (21) du caisson à siphon est bombé vers l'extérieur et est réalisé amovible.

Fig. 1

Fig.2